# EUROPEAN PATENT SPECIFICATION

(11) **EP 3 789 122 B1**
(45) Date of publication and mention of the grant of the patent: **07.12.2022**
(21) Application number: 20193420.5
(22) Date of filing: 28.08.2020
(51) Int. Cl.: B05B 9/00

(54) **SPRAY GUN**
SPRITZPISTOLE
PISTOLET PULVÉRISATEUR

(30) Priority: 30.08.2019 CN 201910813887
(43) Date of publication of application: 10.03.2021
(73) Proprietor: Zhejiang Prulde Electric Appliance Co., Ltd., Jinhua City, Zhejiang 321035 (CN)
(72) Inventor: YANG, Weiming, Xiaoshun Town, Jindong District Jinhua City, Zhejiang 321035 (CN); HAN, Ting, Xiaoshun Town, Jindong District Jinhua City,, Zhejiang 321035 (CN)
(74) Representative: karo IP

(56) References cited:
- CN-U- 210 935 482
- US-A1- 2016 263 600

## Description

### BACKGROUND

### Technical Field

The present disclosure relates to spray guns, and more particularly relate to a spray gun with efficient painting.

### Description of Related Art

As an apparatus for atomizing coating, spray guns mainly serve to finish an object to be painted, thereby achieving an aesthetic, smooth and uniform coating. The spray guns mainly leverage the pressure inside a piston to reduce the space in a liquid container, and the increased air pressure forces out the liquid in the liquid container. As the motorized piston moves continuously, the pressure in the spray chamber rises expeditiously, thereby facilitating atomization of the liquid ejected out of the spray nozzle, and improving the coating effect.

An existing spray gun has a flexible and shrinkable liquid container. During use, as the liquid is forced out and decreases, the liquid container is shrunk and deflated, which guarantees complete ejection of the liquid, thereby avoiding waste and enhancing liquid utilization. However, this structure still has a problem, i.e., when air is present in the liquid container, the liquid cannot rise up into the spray chamber of the pump to implement spray coating, which affects normal operation of the spray gun and lowers painting efficiency and operating efficiency.

US 2016/0263600 A1 discloses a spray gun according to the preamble of claim 1.

It is an object of the present disclosure to at least partially overcome the problems disclosed regarding the above-mentioned prior art.

### SUMMARY

The present disclosure provides a spray gun with efficient painting. The spray gun comprises a casing, a cup, a spray nozzle and a pump. The pump is provided in the casing and has a spray chamber in communication with the cup. The cup includes a cup housing and a flexible cup body provided in the cup housing. A venting structure communicating the cup with an outer environment is provided on the pump. The cup housing is provided with a hollow portion, such that the flexible cup body is manually squeezable to expel air inside the flexible cup body out via the venting structure.

Optionally, the venting structure comprises an air outlet passage in communication with the cup and a venting passage in communication with the outer environment. The venting passage includes a venting port, and the venting structure further comprises a closure cap for covering and uncovering the venting port.

Optionally, a mounting base is provided in the venting port and is formed with a connection hole, and a sealing column inserted into the connection hole is provided on the closure cap.

Optionally, the closure cap is hinged to one side of the venting port.

Optionally, the air outlet passage and the venting passage are arranged in a "┌" shape.

Optionally, a relief valve port in communication with the spray chamber is provided on the pump, the air outlet passage is arranged to communicate with the relief valve port, and a relief valve assembly is disposed at the relief valve port.

Optionally, a charging port in communication with the cup is provided on the pump. A charging screw-plug extending into the cup is connected at the charging port, and a filter mesh assembly is connected at a lower end of the charging screw-plug.

Optionally, the filter mesh assembly includes a filter cover and a filter disc. The filter cover is provided with a filter port, and the filter disc is disposed in the filter port.

Optionally, a surrounding barrier surrounding the filter disc is provided on the filter cover to prevent the flexible cup body being squeezed from attaching to the filter disc.

Optionally, the surrounding barrier is provided with a plurality of notches so as to partition the surrounding barrier into a plurality of stop blocks.

With the above technical solutions, the present disclosure may offer the following advantages.
1. In the present disclosure, a venting structure for communicating the cup with the outer environment is provided, and a hollow portion is provided in the cup housing. In this way, simply squeezing the hollow portion of the flexible cup body enables complete venting of the air present in the flexible cup body via the venting structure. With such configurations, the liquid in the flexible cup body easily enters the inside of the spray chamber, which enables the spray gun to coat stably at a high rate, thereby enhancing operating efficiency of the spray gun.
2. The venting structure is configured to include an air outlet passage in communication with the cup and a venting passage in communication with the outer environment. The venting passage includes a venting port. The venting structure further comprises a closure gap for covering and uncovering the venting port. In this way, the air in the flexible cup body is smoothly conveyed out through the air outlet passage and vented through the venting passage, thereby achieving orderly and stable venting of the air. The closure cap is opened at the time of venting, and then closed upon completion of the venting, which ensures the liquid not to leak out from the venting port during painting, thereby guaranteeing a normal painting operation.
3. A mounting base is provided in the venting port, a connection hole is provided in the mounting base, and a sealing column inserted into the connection hole is provided on the closure cap. Such configurations guarantee that the closure cap is facilitated to cover and uncover the venting port with reliable sealing, preventing leakage of the liquid from the venting port during painting. Besides, such configurations facilitate operations on the closure cap, and the closure cap is opened or closed by a simple depressing or pulling action.
4. The closure cap is hinged to one side of the venting port, which not only facilitates the closure cap to cover and uncover the venting port, but also prevents missing of the closure cap after being opened, which offers convenience for subsequent use of the closure cap.
5. The air outlet passage and the venting passage are arranged in a "┌" shape, in particular with a (substantially) rectangular connection. The detoured venting path guarantees smooth venting of the air while preventing the liquid from leaking out of the venting port.
6. A relief valve port in communication with the spray chamber is provided on the pump. The air outlet passage communicates with the relief valve port. A pressure relief assembly is provided at the relief valve port. With such configurations, the pressure inside the cup is relieved via the air outlet passage. As such, the air outlet passage further functions to relieve pressure. In other words, the air outlet passage has dual functions, saving one passage, thereby simplifying the structure of the pump and lowering the difficulty in manufacturing the pump.
7. The pump is provided with a charging port in communication with the cup. A charging screw-plug extending into the cup is connected with the charging port, and a filter mesh assembly is connected at a lower end of the screw-plug. Such configurations facilitate the liquid in the flexible cup to enter the spray chamber. Besides, the filter mesh assembly enables filtering of the liquid so as to guarantee a finer and homogeneous spraying of the liquid.
8. The filter mesh assembly comprises a filter cover and a filter disc. The filter cover is provided with a filter port, and the filter disc is provided in the filter port. The filter mesh assembly of this structure not only facilitates the liquid to enter the charging screw-plug to guarantee liquid charging effect, but also guarantees liquid filtering effect. Besides, the simple structure is easy to manufacture and mold.
9. A surrounding barrier surrounding the filter disc is provided on the filter cover to prevent the flexible cup body that is squeezed from attaching to the filter disc. With such configurations, the flexible cup body becomes gradually deflated during continuous painting, while the surrounding barrier prevents the deflated flexible cup body from attaching to the filter disc and thus prevents blocking the liquid from entering the screw-plug. As such, normal liquid charging is guaranteed, and the liquid is able to be completely sprayed out, avoiding liquid waste.
10. A plurality of notches are provided on the surrounding barrier to partition the surrounding barrier into a plurality of stop blocks. This configuration not only saves the manufacturing material of the surrounding barrier and thus reduces the manufacturing cost, but also prevents the deflated flexible cup body from attaching to the filter disc, thereby guaranteeing a normal liquid charging and then guaranteeing painting effect.

### BRIEF DESCRIPTION OF THE DRAWINGS

Hereinafter, the present disclosure will be further illustrated with reference to the accompanying drawings:
Fig. 1 is a structural schematic diagram of a spray gun according to the present disclosure.
Fig. 2 is a structural schematic diagram of a cup housing in the spray gun according to the present disclosure.
Fig. 3 is a sectional view of the spray gun according to the present disclosure.
Fig. 4 is an enlarged view of region A in Fig. 3.
Fig. 5 is a structural schematic diagram of a pump in the spray gun according to the present disclosure.
Fig. 6 is a partially sectional view of the pump in the spray gun according to the present disclosure.
Fig. 7 is another sectional view of the spray gun according to the present disclosure.
Fig. 8 is a structural schematic diagram of a filter assembly in the spray gun according to the present disclosure.

### Reference Numerals:

1. Casing; 2. Cup; 21. Cup Housing; 211. Perforated Portion; 22. Flexible Cup Body; 23. Cup Lid; 3. Spray Nozzle; 4. Pump; 41. Spray Chamber; 42. Air Outlet Passage; 43. Venting Passage; 431. Venting Port; 44. Closure Cap; 441. Sealing Column; 45. Mounting Base; 451. Connection Hole; 46. Relief Valve Port; 47. Relief Valve Assembly; 48. Charging Port; 5. Charging Screw-plug; 6. Filter Mesh Assembly; 61. Filter Cover; 611. Filter Port; 612. Surrounding Barrier; 613. Notch; 614: Stop Block; 62. Filter Disc.

### DESCRIPTION OF THE EMBODIMENTS

Hereinafter, the present disclosure will be described in further detail through embodiments with reference to the accompanying drawings. It needs to be understood that the oriental or positional relationships indicated by the terms "upper," "lower," "left," "right," "longitudinal," "transverse," "inner," "outer," "vertical," "horizontal," "top," "bottom," etc. are only based on the drawings, intended only for facilitating or simplifying illustration of the present disclosure, not for indicating or implying that the devices/elements have to possess such specific orientations or have to be configured and operated with such specific orientations. Furthermore, technical details of the illustrated embodiments may be extracted and added to technical details of other (illustrated or disclosed) embodiments. Therefore, they should not be understood as limitations to the present disclosure.

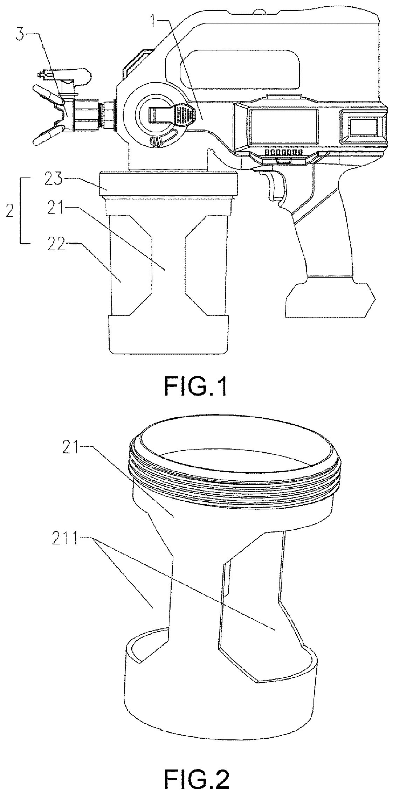

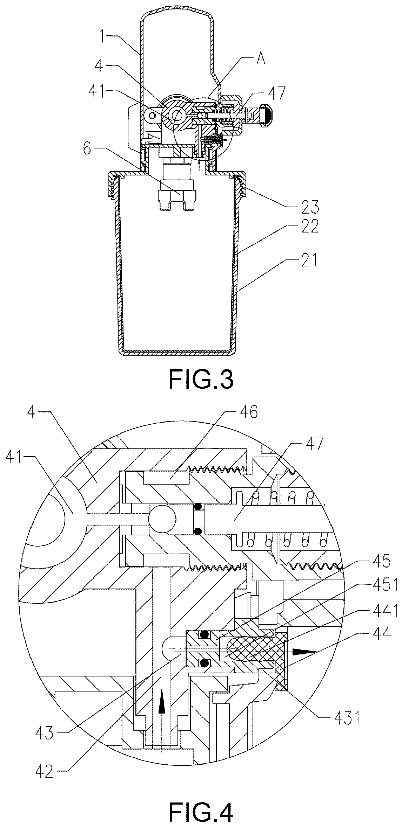

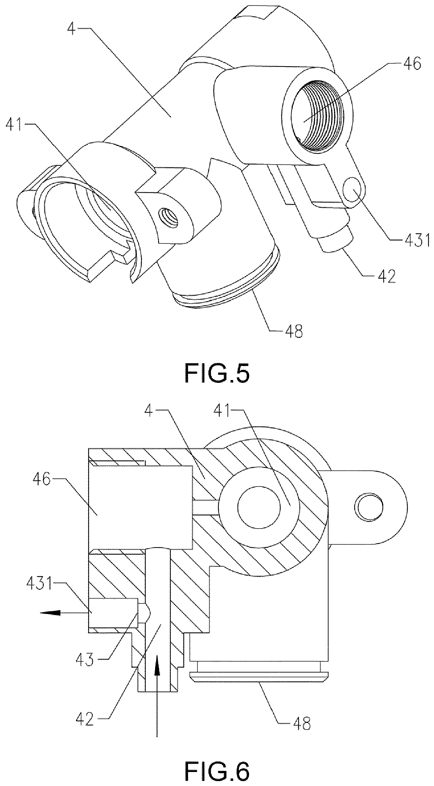

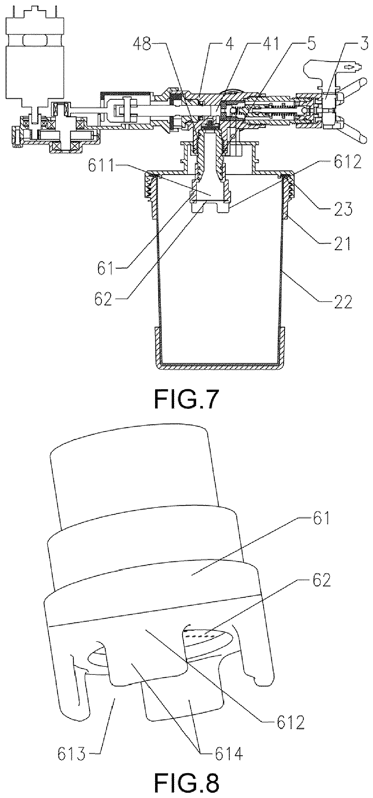

As shown in Fig. 1 to Fig. 8, embodiments of the present disclosure provide a spray gun which includes a casing 1, a cup 2, a spray nozzle 3 and a pump 4. The pump 4 is provided in the casing 1 and has a spray chamber 41 in communication with the cup 2. The cup 2 includes a cup housing 21 and a flexible cup body 22 provided in the cup housing 21. Due to the flexibility, the flexible cup body 22 is deflated as the liquid therein decreases during continuous painting. In this way, the liquid in the flexible cup body 22 can be completely sprayed out, thereby avoiding waste and enhancing liquid utilization.

In this embodiment, a venting structure for communicating the cup 2 with the outer environment is provided on the pump 4. A hollow portion 211 is provided in the cup housing 21. Configuration of the hollow portion 211 enables the flexible cup body 22 to be manually squeezable to expel the air in the flexible cup body 22 out via the venting structure. In other words, when there is air in the flexible cup body 22, the simple action of squeezing the hollow portion 211 of the flexible cup body 22 enables complete venting of the air therein. This facilitates the liquid in the flexible cup body 22 to enter the spray chamber 41, enabling the spray gun to perform painting quickly and stably, thereby enhancing painting efficiency and operating efficiency of the spray gun. Of course, in order to facilitate the user to squeeze the flexible cup body 22, two hollow portions 211 are optionally provided, respectively disposed at two opposite sides of the cup housing 21, such that one hand suffices to squeeze the flexible cup body 22 from the two sides, which offers a better squeezing effect and facilitates venting of the air inside the flexible cup body 22.

The venting structure includes an air outlet passage 42 in communication with the cup 2 and a venting passage 43 in communication with the outer environment. Of course, the air outlet passage 42 communicates with the venting passage 43 and is arranged integral therewith. The venting passage 43 comprises a venting port 431. The venting structure further comprises a closure cap 44 configured for covering and uncovering the venting port 431. The closure cap 44 enables the air in the flexible cup body 22 to be smoothly conveyed via the air outlet passage 42 and vented via the venting passage 43, thereby venting the air in an orderly and stable manner. The closure cap 44 is opened upon venting, and then closed upon completion of the venting. This ensures the liquid not to leak out from the venting port 431 during painting, thereby guaranteeing a normal painting operation.

To facilitate covering and uncovering of the venting port 431, a mounting base 45 is provided inside the venting port 431 and is formed with a connection hole 451. A sealing column 441 which is inserted into the connection hole 451 is provided on the closure cap 44. Such configurations ensure smooth covering and uncovering of the venting port 431, with a reliable sealing to prevent leakage of the liquid from the venting port 431 during painting. Besides, such configurations facilitating operations on the closure cap 44, i.e., a simple depressing or pulling action suffices to open and close the closure cap 44. Meanwhile, hingedly connecting the closure cap 44 to one side of the venting port 431 facilitates opening and closing of the closure cap 44. In an embodiment, a hinged hole is provided in the casing 1 corresponding to the venting port 431, while a hinged axle is provided on one end of the closure cap 44, such that fitting between the hinged axle and the hinged hole enables hinged connection of the closure cap 44, which not only facilitates the closure cap 44 to cover and uncover the venting port 431, but also prevents missing of the opened closure cap 44 and facilitates subsequent use of the closure cap 44.

Moreover, the air outlet passage 42 and the venting passage 43 are arranged in a "┌" shape, i.e., the air outlet passage 42 is longitudinally disposed, while the venting passage 43 is transversely arranged, such that the detoured venting path guarantees smooth venting of the air while preventing leakage of the liquid via the venting port 431.

To guarantee the pressure relief effect of the spray gun and enhance its service life, a relief valve port 46, which communicates with the spray chamber 41, is optionally provided on the pump 4, and the air outlet passage 42 is arranged to communicate with the relief valve port 46. A pressure relief assembly 47 is provided at the relief valve port 46. With such configurations, the pressure inside the cup 2 is relieved via the air outlet passage 42. As such, the air outlet passage 42 further functions to relieve pressure. In other words, the air outlet passage 42 has dual functions, which saves one passage, thereby simplifying the structure of the pump 4 and lowering the difficulty in manufacturing the pump 4.

Meanwhile, a charging port 48 communicating with the cup 2 is provided on the pump 4. The charging port 48 connects with a charging screw-plug 5 extending into the cup 2. The charging screw-plug 5 and the charging port 48 are securely thread-fitted. The lower end of the charging screw-plug 5 connects with a filter mesh assembly 6. The filter mesh assembly 6 and the charging screw-plug 5 are also securely screw-fitted, which facilitates the liquid in the flexible cup body 22 to enter the spray chamber 41. Besides, the filter mesh assembly 6 enables filtering of the liquid to guarantee a finer and homogeneous coating. Of course, to facilitate connection between the cup 2 and the charging port 48, a cup lid 23 is optionally provided on top of the cup housing 21, and a mounting countersink is provided in the cup lid 23. The charging port 48 is inserted into a mounting countersink and is securely fixed thereto by a snap-joint, thereby securely fixing the whole cup 2 to the charging port 48. To ensure sealing performance, a sealing gasket is optionally further provided between the inner sidewall of the mounting countersink and the outer sidewall of the charging port 48, while the cup lid 23 and the cup casing 21 are securely thread-fitted to tightly clamp the edges of the flexible cup body 22, thereby preventing disengagement of the flexible cup body 22.

In an embodiment, the filter mesh assembly 6 comprises a filter cover 61 and a filter disc 62. The filter cover 61 is provided with a filter port 611, and the filter disc 62 is provided in the filter port 611. The filter mesh assembly 6 of this structure not only guarantees the liquid to smoothly enter the charging screw-plug 5 to guarantee liquid charging effect and liquid filtering effect, but also facilitates manufacturing and molding.

To prevent the squeezed flexible cup body 22 from attaching to the filter disc 62 to block liquid spraying, a surrounding barrier 612 is optionally provided on the filter cover 61 surrounding the filter disc 62. As such, when the flexible cup body 22 is gradually deflated during continuous painting, the surrounding barrier 612 prevents the deflated flexible cup body 22 from attaching to the filter disc 62 and further blocks liquid from entering the charging screw-plug 5. In this way, normal liquid charging is guaranteed, and the liquid is enabled to be completely sprayed out, which avoids liquid waste.

To reduce the manufacturing materials and costs, a plurality of notches 613 are provided on the surrounding barrier 612 to partition the surrounding barrier 612 into a plurality of stop blocks 614. This configuration not only saves the processing materials of the surrounding barrier 612 and thus reduces the processing costs, but also prevents the flexible cup body 22 from attaching to the filter disc 62 due to deflation of the soft cup, which guarantees normal liquid charging and thus guarantees painting effect of the spray gun.

Further, a coating mechanism for spraying liquid is a conventional technology, which is thus not detailed and recommended to refer to the Chinese patent application CN206404955U filed by same Applicant earlier. The structure as to the pressure relief mechanism is also conventional, which also refers to the previously published patents such as CN206392292U, which will not be detailed here.

In particular, spray gun is disclosed which includes a casing, a cup, a spray nozzle, and a pump. The pump is provided in the casing and has a spray chamber in communication with the cup. The cup includes a cup housing and a flexible cup body provided in the cup housing. A venting structure communicating the cup with an outer environment is provided on the pump. The cup housing is provided with a hollow portion, such that the flexible cup body is manually squeezable to expel air inside the flexible cup body out via the venting structure. In this way, simply squeezing the perforated portion of the flexible cup body enables complete venting of the air present in the flexible cup body via the venting structure. With such configurations, the liquid in the flexible cup body easily enters the inside of the spray chamber, which enables the spray gun to coat stably at a high rate, thereby enhancing operating efficiency of the spray gun.

## Claims

1. A spray gun, comprising:
a casing (1);
a cup (2), including a cup housing (21) and a flexible cup body (22) that is provided in the cup housing (21);
a spray nozzle (3); and
a pump (4), provided in the casing (1);
wherein the cup housing (21) is provided with a hollow portion (211), such that the flexible cup body (22) is manually squeezable to expel air inside the flexible cup body (22) out via a venting structure communicating the cup (2) with an outer environment;
**characterized in that** the pump (4) has a spray chamber (41) in communication with the cup (2),
and **in that** the venting structure communicating the cup (2) with the outer environment is provided on the pump (4).

2. The spray gun according to claim 1, wherein the venting structure comprises an air outlet passage (42) in communication with the cup (2) and a venting passage (43) in communication with the outer environment, the venting passage (43) includes a venting port (431), and the venting structure further comprises a closure cap (44) for covering and uncovering the venting port (431).

3. The spray gun according to claim 2, wherein a mounting base (45) is provided in the venting port (431) and is formed with a connection hole (451), and a sealing column (441) inserted into the connection hole (451) is provided on the closure cap (44).

4. The spray gun according to claim 3, wherein the closure cap (44) is hinged to one side of the venting port (431).

5. The spray gun according to anyone of claims 2 to 4, wherein the air outlet passage (42) and the venting passage (43) are arranged in a "┌" shape.

6. The spray gun according to anyone of claims 2 to 5, wherein a relief valve port (46) in communication with the spray chamber (41) is provided on the pump (4), the air outlet passage (42) is arranged to communicate with the relief valve port (46), and a relief valve assembly (47) is disposed at the relief valve port (46).

7. The spray gun according to anyone of claims 1 to 6, wherein a charging port (48) in communication with the cup (2) is provided on the pump (4); a charging screw-plug (5) extending into the cup (2) is connected at the charging port (48), and a filter mesh assembly (6) is connected at a lower end of the charging screw-plug (5).

8. The spray gun according to claim 7, wherein the filter mesh assembly (6) includes a filter cover (61) and a filter disc (62), the filter cover (61) is provided with a filter port (611), and the filter disc (62) is disposed in the filter port (611).

9. The spray gun according to claim 8, wherein a surrounding barrier (612) surrounding the filter disc (62) is provided on the filter cover (61) to prevent the flexible cup body (22) that is squeezed from attaching to the filter disc (62).

10. The spray gun according to claim 9, wherein the surrounding barrier (612) is provided with a plurality of notches (613) so as to partition the surrounding barrier (612) into a plurality of stop blocks (614).

## Patentansprüche

1. Eine Sprühpistole, umfassend:
ein Gehäuse (1);
einen Becher (2), der ein Bechergehäuse (21) und einen flexiblen Becherkörper (22), der in dem Bechergehäuse (21) vorgesehen ist, umfasst;
eine Sprühdüse (3); und
eine Pumpe (4), die in dem Gehäuse (1) vorgesehen ist;
wobei das Bechergehäuse (21) mit einem hohlen Teil (211) versehen ist, so dass der flexible Becherkörper (22) manuell zusammengedrückt werden kann, um Luft innerhalb des flexiblen Becherkörpers (22) über eine Entlüftungsstruktur, die den Becher (2) mit einer äußeren Umgebung verbindet, auszutreiben;
**dadurch gekennzeichnet, dass** die Pumpe (4) eine Sprühkammer (41) aufweist, die mit dem Becher (2) in Verbindung steht,
und dass die Entlüftungsstruktur, die den Becher (2) mit der äußeren Umgebung verbindet, an der Pumpe (4) vorgesehen ist.

2. Sprühpistole nach Anspruch 1, wobei die Entlüftungsstruktur einen Luftauslasskanal (42), der mit dem Becher (2) in Verbindung steht, und einen Entlüftungskanal (43), der mit der äußeren Umgebung in Verbindung steht umfasst, wobei der Entlüftungskanal (43) eine Entlüftungsöffnung (431) umfasst, und die Entlüftungsstruktur ferner eine Verschlusskappe (44) zum Abdecken und Freigeben der Entlüftungsöffnung (431) umfasst.

3. Sprühpistole nach Anspruch 2, wobei in der Entlüftungsöffnung (431) ein Montagesockel (45) vorgesehen ist, der mit einem Anschlussloch (451) versehen ist, und an der Verschlusskappe (44) eine in das Anschlussloch (451) eingesetzte Dichtsäule (441) vorgesehen ist.

4. Sprühpistole nach Anspruch 3, wobei die Verschlusskappe (44) mit einer Seite der Entlüftungsöffnung (431) beweglich verbunden ist.

5. Sprühpistole nach einem der Ansprüche 2 bis 4, wobei der Luftauslasskanal (42) und der Entlüftungskanal (43) in einer "┌"-Form angeordnet sind.

6. Sprühpistole nach einem der Ansprüche 2 bis 5, wobei eine mit der Spritzkammer (41) in Verbindung stehende Entlastungsventilöffnung (46) an der Pumpe (4) vorgesehen ist, der Luftauslasskanal (42) so angeordnet ist, dass er mit der Entlastungsventilöffnung (46) in Verbindung steht, und eine Entlastungsventilbaugruppe (47) an der Entlastungsventilöffnung (46) angeordnet ist.

7. Sprühpistole nach einem der Ansprüche 1 bis 6, wobei an der Pumpe (4) eine mit dem Becher (2) in Verbindung stehende Ladeöffnung (48) vorgesehen ist; an der Ladeöffnung (48) ein sich in den Becher (2) erstreckender Ladeschraubstopfen (5) angebracht ist und an dem unteren Ende des Ladeschraubstopfens (5) eine Filtergewebebaugruppe (6) angebracht ist.

8. Sprühpistole nach Anspruch 7, wobei die Filtergewebebaugruppe (6) eine Filterabdeckung (61) und eine Filterscheibe (62) umfasst, die Filterabdeckung (61) mit einer Filteröffnung (611) versehen ist und die Filterscheibe (62) in der Filteröffnung (611) angeordnet ist.

9. Sprühpistole nach Anspruch 8, wobei eine die Filterscheibe (62) umgebende Barriere (612) an der Filterabdeckung (61) vorgesehen ist, um zu verhindern, dass der flexible Becherkörper (22), wenn er zusammengedrückt wird, an der Filterscheibe (62) haftet.

10. Sprühpistole nach Anspruch 9, wobei die umgebende Barriere (612) mit einer Vielzahl von Kerben (613) versehen ist, um die umgebende Barriere (612) in eine Vielzahl von Anschlagsklötzen (614) zu unterteilen.

## Revendications

1. Pistolet de pulvérisation, comprenant :
un boîtier (1) ;
un godet (2), incluant un logement de godet (21) et un corps de godet flexible (22) qui est prévu dans le logement de godet (21) ;
une buse de pulvérisation (3) ; et
une pompe (4), prévue dans le boîtier (1) ;
dans lequel le logement de godet (21) est pourvu d'une partie creuse (211), de telle sorte que le corps de godet flexible (22) puisse être pressé manuellement pour expulser l'air dans le corps de godet flexible (22) vers l'extérieur par l'intermédiaire d'une structure d'aération faisant communiquer le godet (2) avec un environnement extérieur ;
**caractérisé en ce que** la pompe (4) a une chambre de pulvérisation (41) en communication avec le godet (2),
et **en ce que** la structure d'aération faisant communiquer le godet (2) avec l'environnement extérieur est prévue sur la pompe (4).

2. Pistolet de pulvérisation selon la revendication 1, dans lequel la structure d'aération comprend un passage de sortie d'air (42) en communication avec le godet (2) et un passage d'aération (43) en communication avec l'environnement extérieur, le passage d'aération (43) inclut un orifice d'aération (431), et la structure d'aération comprend en outre un bouchon de fermeture (44) pour couvrir et découvrir l'orifice d'aération (431).

3. Pistolet de pulvérisation selon la revendication 2, dans lequel une base de montage (45) est prévue dans l'orifice d'aération (431) et est formée avec un trou de raccordement (451), et une colonne d'étanchéité (441) insérée dans le trou de raccordement (451) est prévue sur le bouchon de fermeture (44).

4. Pistolet de pulvérisation selon la revendication 3, dans lequel le bouchon de fermeture (44) est articulé sur un côté de l'orifice d'aération (431).

5. Pistolet de pulvérisation selon l'une quelconque des revendications 2 à 4, dans lequel le passage de sortie d'air (42) et le passage d'aération (43) sont agencés en une forme de « ┌ ».

6. Pistolet de pulvérisation selon l'une quelconque des revendications 2 à 5, dans lequel un orifice de soupape de détente (46) en communication avec la chambre de pulvérisation (41) est prévu sur la pompe (4), le passage de sortie d'air (42) est agencé pour communiquer avec l'orifice de soupape de détente (46), et un ensemble à soupape de détente (47) est disposé au niveau de l'orifice de soupape de détente (46).

7. Pistolet de pulvérisation selon l'une quelconque des revendications 1 à 6, dans lequel un orifice de chargement (48) en communication avec le godet (2) est prévu sur la pompe (4) ; un obturateur-vis de chargement (5) s'étendant dans le godet (2) est relié à l'orifice de chargement (48), et un ensemble à filtre maillé (6) est relié au niveau d'une extrémité inférieure de l'obturateur-vis de chargement (5).

8. Pistolet de pulvérisation selon la revendication 7, dans lequel l'ensemble à filtre maillé (6) inclut un couvercle de filtre (61) et un disque de filtre (62), le couvercle de filtre (61) est pourvu d'un orifice de filtre (611), et le disque de filtre (62) est disposé dans l'orifice de filtre (611).

9. Pistolet de pulvérisation selon la revendication 8, dans lequel une barrière circulaire (612) entourant le disque de filtre (62) est prévue sur le couvercle de filtre (61) pour empêcher le corps de godet flexible (22), qui est pressé, de s'attacher au disque de filtre (62).

10. Pistolet de pulvérisation selon la revendication 9, dans lequel la barrière circulaire (612) est pourvue d'une pluralité d'entailles (613) afin de diviser la barrière circulaire (612) en une pluralité de blocs d'arrêt (614).
